# EUROPEAN PATENT SPECIFICATION

(11) **EP 3 182 554 B1**
(45) Date of publication and mention of the grant of the patent: **10.06.2020**
(21) Application number: 15460113.2
(22) Date of filing: 15.12.2015
(51) Int. Cl.: H02J 13/00, H02J 3/38, H02J 7/35

(54) **A SYSTEM FOR CONVERTING DISTRIBUTED RENEWABLE ENERGY INTO USABLE ENERGY**
SYSTEM ZUR UMWANDLUNG VON VERTEILTER ERNEUERBARER ENERGIE IN NUTZBARE ENERGIE
SYSTÈME DE CONVERSION D'UNE ÉNERGIE RENOUVELABLE RÉPARTIE EN ÉNERGIE UTILISABLE

(43) Date of publication of application: 21.06.2017
(73) Proprietor: ML SYSTEM Spólka Akcyjna, 36-062 Zaczernie (PL)
(72) Inventor: Cycon, Dawid, 35-317 Rzeszów (PL); Chochorowski, Wiktor, 35-111 Rzeszów (PL); Stanek, Olga, 35-506 Rzeszów (PL); Stanek, Edyta, 35-317 Rzeszów (PL)
(74) Representative: Warzybok, Tadeusz

(56) References cited:
- WO-A2-2009/155445
- CN-U- 203 617 954
- GB-A- 2 405 492
- US-A1- 2012 249 065
- DASH RITESH ET AL: "Hybrid System for Meeting Global Energy Demand", 13 February 2015 (2015-02-13), 2015 IEEE INTERNATIONAL CONFERENCE ON COMPUTATIONAL INTELLIGENCE & COMMUNICATION TECHNOLOGY, IEEE, PAGE(S) 709 - 713, XP032758583, [retrieved on 2015-04-01] * Section II A; figure 1 *

## Description

The subject of the present invention is a system for converting distributed renewable energy into usable energy.

The source of distributed renewable energy can include photovoltaic generators of 1^{st}, 2^{nd} and 3^{rd} generation, e.g. polycrystalline, monocrystalline, back-contact, thin-film micromorphous, microamorphous, cadmium telluride (CdTe), copper-indium-gallium-silicon (CIGS), copper-indium-silicon (CIS), organic (DSSC), quantum dot (QDS) or perovskite (PSC) solar cells, as well as wind generators of rotor, drum, carousel, tornado, Darrieus, multiplane or propeller type, whereas the above-listed energy sources generate electric energy characterised with DC (direct current) voltage.

On the other hand, the usable energy means such electric energy, including energy converted from distributed renewable energy sources, parameters acceptable by local electric power distribution company to which the system is connected.

From Polish patent application No. P-398332 known is an electric method of summing up the distributed wind energy consisting in that that voltages of a plurality of small wind power generators situated close with respect to each other are connected electrically in series creating thus an AC bus grid terminated with a receiving-converting-generating station with power equalling the sum of powers of the individual wind power generators. The receiving-converting-generating station is a station in which the power of the supplied direct current is transformed, by means of a converter, into power of alternating current with parameters consistent with parameters of the national power grid.

Known from Chinese patent description No. CN 104092236 is a solution entitled "Hybrid renewable energy, a system of supplying from renewable energy sources, and a system of control and thereof' consisting in that the renewable energy sources, which can be photovoltaic generators and wind power generators, are connected to a common DC voltage line which is coupled bidirectionally with a converter converting DC electric energy into AC electric energy, such converter being in turn coupled bidirectionally with an AC voltage line transmitting the electric energy to the main electric power grid, whereas said line is coupled bidirectionally with a device-accumulator storing the AC electric energy, and moreover said AC voltage line can be additionally supplied from other renewable sources DC electric energy converted into alternating current.

From patent description US 2014/0285010 A known is a system and method for integrating and managing demand and/or response between alternative energy sources, grid power, and loads comprising a floating DC bus, one or more power-generators coupled to said bus, and one or more power-consumers also coupled to the DC bus, wherein the floating DC bus has an operating voltage that is allowed to vary over a range from a minimum bus operating voltage up to a maximum safe bus voltage. Variation in the operating voltage of the DC bus controls an operation of at least one power-generator or at least one power-consumer based on a control voltage range of the at least one power-generator or the at least one power-consumer. Switching on or off these power generators or power consumers, which have staggered control voltage ranges, provides their staggered performance at different voltage levels on the DC bus in order to provide automatic demand/response performance.

Description of invention granted patent US 8531055B2 reveals safety mechanisms, wake up and shutdown methods in distributed power installations which have a distributed power system including multiple DC power sources and multiple power modules. The power modules include inputs coupled respectively to the DC power sources and outputs coupled in series to form a serial string, with an inverter coupled to the serial string and converting power input from the serial string to output power. The system has also a signalling mechanism situated between the inverter and the power module adapted for controlling operation of said power modules.

Further, patent description US 2012/0019203A1 discloses invention providing an energy storage and a vehicle charging system for a substation on an electrical power network with an energy storage system coupled to receive and store electrical power. The stored electrical power may then be used to either charge vehicles or meeting the needs of other discretionary or interruptible loads. The idea of the invention consists in that the energy storage system comprises an energy distribution facility having at least one energy input and a plurality of energy outputs and an energy storage device coupled to said at least one energy input and at least one of said plurality of energy outputs. Further, a charging station is associated with said energy distribution and configured to removably couple said energy storage device in one or more electric vehicles, said charging station being geographically proximate to said energy distribution facility and electrically coupled with an inverter or motor generator set.

From a paper by Ritesh Dash et al. entitled "Hybrid system for Meeting Global Energy Demand", presented on 13 February 2015 at the International Conference on Computational Intelligence & Communication Technology, known is a hybrid system with a parallel layout comprising photovoltaic panels and a compression ignition engine in which the power is produced by a Diesel engine-powered generator and converted into direct current by a rectifier and then converted into alternating current by an inverter. The inverter has a structure adapted to maximum load and converting the direct current into alternated current and supplying this alternating current. The current source from PV panels is connected in series with the Diesel engine generator and with a charging controller controlling charging and discharging voltage levels of a battery which is used both for storage and transferring energy excess or deficit as well as for supporting operations relating to Diesel engine start-up or variations of its load. Also in case of the hybrid system of PV-wind generator, both photovoltaic panels and wind generators are connected with each other in series via a rectifier, the system being also equipped with a battery used to store energy produced with the used of both of these sources and the battery playing the role of optional power supply source

A figure representing a model of the hybrid system shows comprises two bus bars, of which one is supplied from a hydro-generator, and the other is connected to conductor of a photovoltaic panel PV, whereas a converter for converting energy from PV panel is situated between the buses and connected bidirectionally with the bus powered from the hydro-generator.

From description of patent US 2012/0249065 A1, known is a multiuse energy management and conversion system including electric vehicle charging which, as presented in Fig. 3 is equipped with a high-voltage DC bus coupled, through intelligently controlled electrical conversion modules to the utility grid or through a voltage converter converting energy of alternating current into energy of direct current or converting energy in opposite way. Moreover, the bus is coupled also to a local energy storage device, a wind generator, a solar generator and/or an electricity generator of other type, as well as to battery pack installed in an electric vehicle, whereas the local energy storage device (e.g., an array of batteries or fuel cells or capacitors, etc.). To recharge the on-board battery pack of the electric vehicle from the local energy storage device, the current or energy flows through the bus to the charging port of the vehicle.

GB2405492 A discloses a plurality of power plants connected to the grid and including an inverter connected to a web-enabled site apparatus for communication with a PC and a central intelligent power application server.

The prior art does not offer any technical solutions ensuring failure-free operation of the whole distributed renewable energy generating system and allowing to establish data exchange connections over distances limited only by the well-known and commonly used optical technology.

The objective of the invention is to eliminate the above-quoted inconveniences by providing a simple system of converting distributed renewable energy into usable electric energy, said system playing the role of photovoltaic inverter allowing to combine individual modules of the system with a main converting unit with the possibility to extend the system by connecting additional functional modules.

The subject-matter of the system for converting distributed renewable energy into usable energy, said renewable energy being produced by both photovoltaic generators and generators producing renewable energy of types other than photovoltaic, the generators being coupled with each other in series or in parallel creating a direct current grid terminated with a DC/AC converting unit with a power equalling the sum of powers produced by said generators, said unit converting the electric energy of direct voltage into electric energy of alternating voltage and being coupled with the alternating current power supply grid and with a DC voltage bus to which, through controller modules, renewable energy generators as well as a battery pack charging module and an electric vehicle recharging station module are coupled consists in that the DC/AC converting unit of the system is coupled bidirectionally with at least one MPPT controller module adapted to co-operate with renewably energy generators, and the DC/AC converting unit is coupled bidirectionally with the battery pack charging controller module, wherein the modules of said MPPT controllers are coupled electrically and bidirectionally with the vehicle charging station controller module powered from a local alternating voltage source, wherein the DC/AC converting unit is connected electrically and bidirectionnally through a PC type computer with local IT network, said unit is adapted to function, apart from converting electric energy with DC voltage into electric energy of alternating current AC, as a means of managing operation of all distributed renewable energy modules of the system, converting the energy into AC usable energy, measuring and controlling the electric energy transferred to the local AC voltage source, communicating with the local IT network, and exchanging data concerning technical parameters of the system. Said communication within the system between its individual controller modules and the main converting unit can be preferably accomplished by means of an optical fibre network equipped with optical system for transmission of signals carrying necessary information about operation of the system and its modules.

Moreover, the DC voltage bus of the system is an external bus comprising two copper conductors with the cross-section surface areas and the insulation resistance values adapted to the power and voltage to be supplied as well as to the distance between all the individual modules distributed over the area in question according to actual configuration of the system.

The system for converting distributed renewable energy into usable energy according to the invention allows to situate its MPPT controller modules directly at the renewable energy generators which allows to reduce length of connection leads conducting direct current with intensity varying in time. Transmission of electric power between modules of MPPT controllers and the main AC/DC converting unit realised by means of common DC voltage bus results in increasing of the power transmission voltage between them from 600 V to 1000 V. Moreover, increased voltage under which the DC power is transmitted further between MPPT controller modules and the converting unit, energy losses connected with electric power transmission are significantly reduced and allow to extend distances over which connections of the main DC bus can be provided. Among further merits of using the system according to the invention, the following should be mentioned:
- the possibility to expand the system, depending on needs, with additional functional modules making up the system;
- the possibility to construct photovoltaic systems in which individual groups of photovoltaic panels will be oriented towards sunrays under different angles or in different directions;
- eliminating the problem occurring frequently in large and spatially extensive photovoltaic systems by employing appropriate segregation of panels making up said systems and coupling said panels with MPPT controller modules being also components of the system;
- the possibility to eliminate occurrence of interference, especially this caused by atmospheric factors (lightning discharges), and thus assure failure-free operation of the whole system;
- the possibility to establish data exchange connections over distances limited only by the known optical technology with the option to use the optical data transmission technology to exchange control and diagnostic data.

Moreover, the system according to the invention allows to acquire electric power from both photovoltaic generators manufactured according to any technology, including 1^{st}, 2^{nd}, and 3^{rd} generation photovoltaic cells generators, and from generators other than photovoltaic.

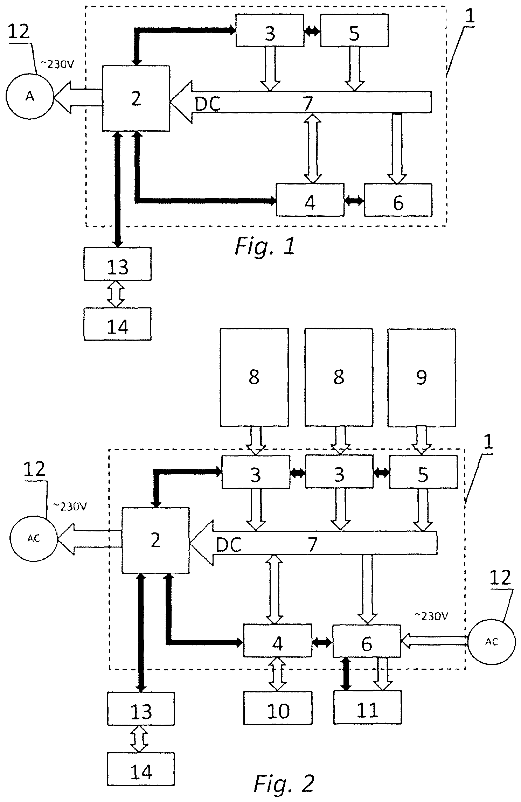

The subject of the invention is explained in more detail with the use of example embodiments shown in drawings, of which Fig. 1 shows a block diagram representing connections between modules making up the whole system and Fig. 2 - a block diagram of modules of the system as applied in practice, supplemented with further example modules co-operating with each other together with directions of the energy transfer and data exchange routes.

As shown in Fig. 1, the system 1 according to the invention comprises a main DC/AC converting unit 2 coupled bidirectionally with the MPPT controller module 3, adapted to co-operate with a photovoltaic module and coupled bidirectionally with the accumulator battery charging controller module 4 and a MPPT controller module 5 adapted to co-operate with renewable energy sources other than photovoltaic generators (panels) coupled with the MPPT controller module 3 and with electric vehicle charging station controller module 6 coupled bidirectionally with the accumulator battery charging controller module 4, whereas the main AC/DC converting unit 2, the MPPT controller modules 3 and 5, and the accumulator battery charging module 4 are connected in parallel with the common voltage bus 7 with elevated DC voltage.

In the example embodiment of the system 1 for converting distributed renewable energy into usable energy shown in Fig. 2, the system is equipped additionally with two groups of photovoltaic generators 8 coupled with two MPPT controller modules 3 and a renewable energy generator 9 being a wind generator coupled with MPPT controller module 5, whereas photovoltaic generators 8 generate DC electric power which, by means of MPPT controller modules 3 coupled with them, is converted into electric power which is also a DC voltage but of higher value and from outputs of these modules is conveyed directly onto the common DC voltage bus 7 to which, via said MPPT controller module 5, renewable energy generator 9 is also connected. Moreover, the system 1 has a battery of accumulators 10 connected to the accumulator battery charging controller module 4, while socket 11 for charging electric vehicles is connected to the electric vehicle charging station controller module 6 powered from the AC power grid 12 with rated voltage 230 V, whereas its main DC/AC converting unit 2 is coupled bidirectionally via a PC computer 13 controlling operation of the system with local IT network 14.

In further two examples of practical application of the system 1 according to the invention, four and six MPPT controller modules were used, respectively, adapted to co-operate with photovoltaic panels 3, and two and three MPPT controller modules 5, respectively, adapted to co-operate with wind-powered renewable energy generators connected appropriately in series with each other and in parallel with the main voltage bus 7.

The purpose of MPPT controller modules 3 and 5 is to acquire electric energy from renewable energy generators 8 and 9 coupled with them with as high efficiency as possible and to transfer the energy in the form of electric current with intentionally increased voltage to the main voltage bus 7. Further, the accumulator battery charging controller module 4 controls the process of charging and discharging the battery or batteries 10 connected to it, whereas the energy transfer in said module can occur in both directions depending on conditions in which the system 1 operates. Electric energy from the voltage bus 7 can be transferred partly to the electric vehicle charging station controller module 6 and further to electric vehicle charging socket 11 controlled by said module. The electric vehicle charging station controller module is the only module capable to be connected to the external AC power source with voltage 230 V via a local connection point 11, said source being either a single-phase grid or a three-phase grid depending on configuration of local power supply system. This way, the supplied AC voltage energy is conveyed only to the electric vehicle charging socket 11 in case of shortage of electric energy generated by renewable energy generators 8 and 9 and shortage of electric energy stored in the battery of accumulators 10, whereas the module prevents from transferring the electric power from the local AC voltage source 12 to the main voltage bus 7. The DC electric energy transferred to the main DC voltage bus 7 is conveyed by said bus to the main DC/AC converting unit 2 in which the electric energy is converted from DC voltage to usable AC electric energy meeting requirements established by local electric power distributor operating in the area where the system 1 is deplayed, whereas said energy can be transferred to either single-phase grid or three-phase grid.

The DC voltage bus 7 is an external bus comprising two copper conductors with the cross-section surface areas and the insulation resistance values adapted to power and voltage to be supplied as well as to the distance between all the individual controller modules 3-6 distributed over the area in question according to actual configuration of the system 1. The main DC/AC converting unit 2, apart from its function of converting electric energy of DC voltage into electric energy with AC voltage, controls also operation of all distributed renewable energy modules 3 and 5 of the system 1, converts the energy into usable AC energy, measures and controls the electric energy transferred to local AC energy source 12, and provides communication, including exchange of data (parameters), within a local IT network 14 by means of a PC computer 13 coupled with said unit. Communication between individual controller modules 3, 4, 5, and 6 of the system 1 and the main DC/AC converting unit 2 is realised via a fibre-optic network (not shown in the figures) and an optic system conveying such information as: the system operation status, its possible failure conditions, and actual values of electric parameters of the converted and transformed electric energy, e.g. the values of the electric current intensity and electric voltage. A parameter critical for correct operation of the whole system 1 is its ability to adjust each of the controller modules 3, 4, 5, and 6 to the voltage value prevailing on the main voltage bus 7, whereas the system is also equipped with a technical means (not shown in the figures) realising the function consisting in automatic switching each of the modules off in case of its failure or malfunction as well as in case when the energy transferred to the voltage bus 7 differs significantly from parameters predetermined for said modules, for instance in case of the amount of energy generated by renewable energy generators 3 and 5 required for correct operation of the MPPT control modules 5 and 6 coupled with said generators being insufficient.

## Claims

1. A system for converting distributed renewable energy into usable energy, said renewable energy being produced by both photovoltaic generators and generators producing renewable energy of types other than photovoltaic, the generators being coupled with each other in series or in parallel creating a direct current grid terminated with a DC/AC converting unit (2) with a power equalling the sum of powers produced by said generators, said unit (2) converting the electric energy of direct voltage into electric energy of alternating voltage and being coupled with the alternating current power supply grid and with a DC voltage bus (7) to which, through controller modules (3,4, 5,6), renewable energy generators (8, 9) as well as a battery pack charging module (4) and an electric vehicle recharging station module (6) are coupled wherein the DC/AC converting unit (2) of the system is coupled bidirectionally with at least one MPPT controller module (3) adapted to co-operate with renewably energy generators, and the DC/AC converting unit (2) is coupled bidirectionally with the battery pack charging controller module (4), wherein the modules of said MPPT controllers (3, 5) are coupled electrically and bidirectionally with each other, and the battery pack charging controller module (4) is coupled electrically and bidirectionally with the vehicle charging station controller module (6) powered from a local alternating voltage source (12), wherein the DC/AC converting unit (2) is connected electrically and bidirectionnally through a PC type computer (13) with local IT network (14), said unit (2) is adapted to function, apart from converting electric energy with DC voltage into electric energy of alternating current AC, as a means of managing operation of all distributed renewable energy modules (3, 5) of the system, converting the energy into AC usable energy, measuring and controlling the electric energy transferred to the local AC voltage source (12), communicating with the local IT network (14), and exchanging data on relevant technical parameters of the system.

2. The system according to claim 1 **characterised in that** communication between its individual controller modules (3- 6) and the main DC/AC converting unit (2) is maintained via a fibre-network with an optic system for transmission of signals carrying necessary information on operation of the system and its modules.

3. The system according to claim 1 **characterised in that** the DC voltage bus (7) is an external bus comprising two copper conductors with the cross-section surface areas and the insulation resistance values adapted to the power and voltage as well as to the distance between the individual modules (3-6) distributed over the area corresponding to the actual configuration of the system.

## Patentansprüche

1. Ein System zur Umwandlung verbreiteter, erneuerbarer Energie in nutzbare Energie, wobei die erneuerbare Energie sowohl von Photovoltaikgeneratoren als auch von Generatoren erzeugt wird, die erneuerbare Energie anderes Typus als Photovoltaik erzeugen, wobei die Generatoren in einer Reihe oder parallel miteinander gekoppelt sind und ein Gleichstromnetz bilden, das mit einer DC/AC-Wandler Einheit (2) mit einer Leistung endet, die der Summe der von den Generatoren erzeugten Leistungen entspricht, wobei die Einheit (2) die elektrische Energie der Gleichspannung in elektrische Energie der Wechselspannung umwandelt und mit dem Stromversorgungsnetz des Wechselstroms und mit einem Gleichspannungsbus (7) gekoppelt ist, an den über Steuerungsmodule (3,4,5,6) Generatoren für erneuerbare Energien (8, 9) sowie ein Batteriemodul (4) und ein Ladestationsmodul für Elektrofahrzeuge (6) gekoppelt sind, wobei die DC/AC-Wandler Einheit (2) des Systems bidirektional mit mindestens einem MPPT-Steuermodul (3) gekoppelt ist, das für die Zusammenarbeit mit erneuerbaren Energie-Generatoren geeignet ist und die DC/AC-Umwandlungseinheit (2) ist bidirektional mit dem Batteriepack-Ladesteuerungsmodul (4) gekoppelt, wobei die Module der MPPT Steuerungen (3,5) elektrisch und bidirektional miteinander gekoppelt sind, und das Batteriepack-Ladesteuerungsmodul (4) elektrisch und bidirektional mit dem Fahrzeugladestations-Steuerungsmodul (6) gekoppelt ist, das von einer lokalen alternativen Spannungsquelle gespeist wird (12), wobei die DC/AC-Wandler Einheit (2) elektrisch und bidirektional über einen PC-Computer (13) mit lokalem IT Netzwerk (14) verbunden ist, wobei die Einheit (2) dazu angepasst ist, um neben der umgewandelten elektrischen Energie mit Gleichspannung in elektrische Energie des Wechselstroms zu funktionieren, als Mittel zur Steuerung des Betriebs von allen verbreiteten Modulen für erneuerbare Energien (3 5) des Systems, Umwandlung der Energie des Wechselstroms in brauchbare Energie, Messung und Kontrolle der elektrischen Energie, die auf lokale AC Spannungsquellen (12) übertragen wurde, Kommunikation mit dem lokalen IT-Netzwerk (14), und Austausch von Daten über relevante technische Systemparameter.

2. Das System wird gleich Forderung 1 **dadurch charakterisiert, dass** in der Kommunikation zwischen seinen einzelnen Steuerungsmodulen (3-6) und der Haupt-DC/AC-Wandler Einheit (2) über ein Glasfasernetz mit einem optischen System zur Übermittlung von Signalen mit den erforderlichen Informationen über den Systembetrieb und seiner Modulen, es aufrechterhalten wird.

3. Das System wird gleich Forderung 1 **dadurch charakterisiert, dass** der Gleichstromspannungs-Bus (7) ein externer Bus ist, der aus zwei Kupferleitern mit einem Oberflächenquerschnitt und den Isolationswiderstandswerten besteht, die an die Leistung und Spannung sowie an den Abstand zwischen den einzelnen Modulen (3 - 6) angepasst sind und über das Gebiet verbreitet, das der tatsächlichen Konfiguration des Systems entspricht.

## Revendications

1. Système de conversion d'énergie renouvelable distribuée en énergie utilisable, ladite énergie renouvelable étant produite à la fois par des générateurs photovoltaïques et par des générateurs produisant de l'énergie renouvelable de types autres que photovoltaïques, les générateurs étant couplés entre eux en série ou en parallèle créant un réseau de courant continu terminé par un convertisseur DC/AC (2) d'une puissance égale à la somme des puissances produites par lesdits générateurs, ledit convertisseur (2) convertissant l'énergie électrique de tension continue en énergie électrique de tension alternative et étant couplé au réseau d'alimentation en courant alternatif et à un bus de tension continue (7) auquel il est relié, par l'intermédiaire de modules de commande (3, 4, 5, 6), des générateurs d'énergie renouvelable (8, 9) ainsi qu'un module de chargement de batterie (4) et un module de station de recharge de véhicule électrique (6) sont couplés, tandis que le convertisseur DC/AC (2) du système est couplé de manière bidirectionnelle avec au moins un module de commande MPPT (3) compatible avec des générateurs d'énergie renouvelable, et le convertisseur DC/AC (2) est couplé de manière bidirectionnelle avec le module de commande de chargement de batterie (4), tandis que les modules de commande MPPT (3, 5) sont couplés électriquement et bidirectionnellement entre eux, et le module de commande de chargement du bloc de batteries (4) est couplé électriquement et bidirectionnellement au module de commande de la station de chargement du véhicule (6) alimenté par une source locale de tension alternative (12), tandis que le convertisseur DC/AC (2) est connecté électriquement et bidirectionnellement à un réseau informatique local (14) par l'intermédiaire d'un ordinateur de type PC (13), ledit convertisseur (2) est adapté pour fonctionner, outre la conversion de l'énergie électrique à tension continue en énergie électrique à courant alternatif, comme un moyen de gérer le fonctionnement de tous les modules d'énergie renouvelable distribués (3, 5) du système, de convertir l'énergie en énergie utilisable à courant alternatif, de mesurer et de contrôler l'énergie électrique transférée à la source de tension alternative locale (12), de communiquer avec le réseau informatique local (14) et d'échanger des données sur les paramètres techniques pertinents du système.

2. Le système selon la revendication 1, se **caractérise par le fait que** la communication entre ses différents modules de commande (3-6) et le convertisseur DC/AC principal (2) est maintenue via un réseau de fibres avec un système optique pour la transmission de signaux portant les informations nécessaires sur le fonctionnement du système et de ses modules.

3. Le système selon la revendication 1 se **caractérise par le fait que** le bus de tension continue (7) est un bus externe composé de deux conducteurs en cuivre dont les surfaces de section et les valeurs de résistance d'isolement sont adaptées à la puissance et à la tension ainsi qu'à la distance entre les différents modules (3-6) répartis sur la zone correspondant à la configuration du système.
